# EUROPÄISCHE PATENTSCHRIFT

(11) **EP 4 211 388 B1**
(45) Veröffentlichungstag und Bekanntmachung des Hinweises auf die Patenterteilung: **26.02.2025**
(21) Anmeldenummer: 21773758.4
(22) Anmeldetag: 08.09.2021
(51) Int. Cl.: F17C 13/02, F03D 9/11, F03D 9/32

(54) **ANORDNUNG ZUM SPEICHERN VON GAS**
ARRANGEMENT FOR STORING GAS
SYSTÈME DE STOCKAGE DE GAZ

(30) Priorität: 12.09.2020 DE 102020005590
(43) Veröffentlichungstag der Anmeldung: 19.07.2023
(73) Patentinhaber: Messer GasPack GmbH, 47803 Krefeld (DE)
(72) Erfinder: KRIESE, Alexander, 2500 Baden bei Wien (AT)
(74) Vertreter: Münzel, Joachim R.
(86) Internationale Anmeldenummer: PCT/EP2021/074700
(87) Internationale Veröffentlichungsnummer: WO 2022/053509

(56) Entgegenhaltungen:
- CN-A- 103 308 117
- DE-C2- 19 923 844
- DE-U1- 20 301 168
- US-A1- 2013 306 650
- US-A1- 2016 097 666

## Beschreibung

Die Erfindung betrifft eine Anordnung zum Speichern von Gas, mit wenigstens einem Behälter zum Speichern eines Gases in flüssiger oder gasiger Form, mit einer dem wenigstens einen Behälter zugeordneten elektronischen Kontrolleinheit zum Erfassen, Anzeigen und/oder Übermitteln von Daten und mit einer Energieerzeugungseinrichtung zur Bereitstellung der von der Kontrolleinheit benötigten elektrischen Energie.

Zum Lagern von Druckgasen und verflüssigten Gasen, insbesondere technische oder medizinische Gase, wie beispielsweise Sauerstoff, Stickstoff, Wasserstoff, Kohlendioxid oder Edelgase, kommen verschiedene Behälter, wie Tanks, Druckgasflaschen oder Druckgasflaschenbündel zum Einsatz.

Um große Mengen an Gasen speichern zu können, kommen meist vakuumisolierte Tanks (Standtanks) in Größen zwischen 180 Litern und 100000 Litern zum Einsatz, in denen das Gas im tiefkalt verflüssigten Zustand gelagert wird.

Druckgasflaschen dienen zum Speichern von Gasen unter Druck. Sie besitzen ein Füllvolumen von beispielsweise 1 Liter bis 200 Liter und sind in der Regel aus Stahl, Aluminium oder einem Verbundmaterial gefertigt und weisen einen Betriebsdruck von üblicherweise zwischen 150 bar und 300 bar auf.

Um einen mittleren Gasebedarf eines Kunden abzudecken, kommen in zunehmendem Maße Druckgasflaschenbündel zum Einsatz. Dabei handelt es sich um Anordnungen, bei denen mehrere, beispielsweise 4, 6, 8, 12, 18 oder 28 Druckgasflaschen der oben genannten Art stehend oder liegend innerhalb eines meist ganz oder teilweise offenen Rahmengestells zusammengefasst und mittels einer Verrohrung strömungstechnisch miteinander verbunden sind. Zur Gasentnahme ist das Druckgasflaschenbündel mit einem oder mehreren Entnahmeventilen ausgerüstet. Gasflaschenbündel dieser Art werden beispielsweise in der DE 3 805 497 C1 oder der EP 0 230 904 A2 beschrieben.

Druckgasflaschen werden zunehmend mit aufwändigen Entnahmesystemen ausgestattet, die als integrierte Ventile oder VIPR (valve with integrated pressure regulator) bezeichnet werden. Bei integrierten Ventilen sind neben einem Absperrorgan weitere Armaturen kompakt innerhalb eines Gehäuses angeordnet, wie beispielsweise Druckregler, Druckregler, Anzeigeeinrichtungen, ein oder mehrere Anschlüsse für die Entnahme von Gas und/oder für die Befüllung der Druckgasflasche oder Systeme zur Fernüberwachung der Druckgasflasche. Beispiele für integrierte Ventile finden sich etwa in der US 8 322 569 B2, der US 6 732 996 B1, der US 8 534 312 B2, der WO 2008/052022 A2 oder der US 2008/0095607 A1. Auch Tanks oder Druckgasflaschenbündel werden zunehmend mit Überwachungssystemen ausgerüstet, über die beispielsweise der jeweilige Behälterinhalt laufend erfasst und einer Fernwarte übermittelt wird, von der aus dann bei Bedarf automatisch Austausch oder Befüllung des Behälters organisiert wird. US 2016/097666 A1 offenbart einen bekannten Tank.

Die zusätzlichen Armaturen oder Systeme arbeiten üblicherweise mit elektronischen Elementen, wie Schaltkreisen, Speichern, Anzeigeinstrumenten, Sendern, etc., die einer Stromversorgung bedürfen. Da eine Stromversorgung über Kabel oft unzweckmäßig und in einigen Fällen gar nicht möglich ist, erfolgt die Stromversorgung in der Regel über Batterien, die im integrierten Ventil oder in einer elektronischen Kontrolleinheit am Behälter eingebaut sind. Auch wenn der Strombedarf nur relativ gering ist, müssen die Batterien von Zeit zu Zeit ausgetauscht werden, was einen nicht unerheblichen Zeit- und Arbeitsaufwand erfordert.

Es ist daher bereits vorgeschlagen worden, Flüssiggastanks oder integrierte Ventile mit Solarmodulen auszurüsten, die in Verbindung mit einem Stromspeicher eine dauerhafte Stromversorgung der elektronischen Elemente im Ventil sicherstellen sollen. Beispielsweise werden in der DE 203 011 68 U1, der DE 10 2010 033 893 A1, der US 10 480 717 B2 oder der US 10 677 391 B2 Anordnungen zum Speichern von Gasen beschreiben, die zumindest optional den Einsatz von Solarmodulen als integrierte Energiequelle erwähnen.

Allerdings sind Solarmodule als Energiequelle nicht für alle Standorte von Anordnungen zum Speichern von Gas geeignet. Insbesondere an dauerhaft beschatteten oder dunklen Standorten oder solchen, bei denen eine auf das Solarmodul fallende künstliche Beleuchtung nicht zur Erzeugung einer hinreichenden Strommenge ausreicht, können derartige Anordnungen nicht eingesetzt werden.

Aufgabe der vorliegenden Erfindung ist daher, eine mit elektronischen Zusatzfunktionen ausgerüstete Anordnung zum Speichern von Gas zu schaffen, die mit einer autonomen Energieversorgung ausgerüstet ist und die auch an Standorten einsetzbar ist, an denen eine solare Stromversorgung nicht möglich ist.

Diese Aufgabe wird mit einer Anordnung zum Speichern von Gas mit den Merkmalen des Patentanspruchs 1 gelöst. Vorteilhafte Ausgestaltungen der Erfindung werden in den Unteransprüchen beansprucht.

Erfindungsgemäß umfasst die Energieerzeugungseinrichtung also einen Windgenerator zum Umwandeln von Windenergie in elektrischer Energie und eine Energiespeichereinheit zum zumindest zeitweiligen Speichern von durch den Windgenerator erzeugter elektrischer Energie.

Die mit Windgenerator und Energiespeichereinheit ausgerüstete Energieversorgungseinrichtung ermöglicht als Insellösung eine autarke Stromversorgung der elektronischen Kontrolleinheit insbesondere an Standorten, an denen eine externe Energieversorgung oder eine lokale photovoltaische Energieversorgung nicht oder nur unter unangemessen hohem Aufwand möglich ist.

Die elektronische Kontrolleinheit ist bevorzugt am Behälter oder an einer dem Behälter zugeordneten Befestigungseinrichtung fest montiert und wird mit dem Behälter, beispielsweise zu einer Füllanlage oder zu einem Kunden, transportiert. Sie erfasst, visualisiert und/oder übermittelt Daten über den Behälter, den Behälterinhalt und/oder über sonstige gemessene oder erfasste Parameter. Beispielsweise erfasst die elektronische Kontrolleinheit den Druck oder die Temperatur des Behälterinhalts, die Umgebungstemperatur, einen Füllstand, einen Zustand und/oder einen Standort des Behälters und übermittelt die entsprechenden Daten zusammen mit einer eingespeicherten Kennung des Behälters per Datenfernübertragung an eine Warte in der Umgebung des Behälters oder am Standort eines Gaselieferanten.

Die Erfindung geht von der Überlegung aus, dass selbst aufwändig gestaltete elektronische Kontrolleinheiten einen Strombedarf von nicht mehr als 200 bis 400 mAh/Jahr besitzen. Zur Deckung dieses Strombedarfs reichen schon vergleichsweise kleine Windgeneratoren und/oder nur vergleichsweise wenig Luftbewegung im Bereich des Windgenerators über einen längeren Zeitraum aus.

Als "Windgenerator" soll hier ein Stromerzeugungssystem verstanden werden, bei der ein drehbeweglich gelagerter Rotor (Windturbine) durch die Bewegung umgebender Luft in Drehbewegung versetzt und die resultierende Rotationsenergie zumindest teilweise in elektrische Energie umgewandelt wird. Für die Zwecke der vorliegenden Erfindung genügen vergleichsweise schwache Windgeneratoren, die vergleichsweise klein dimensioniert sind und leicht an der erfindungsgemäßen Anordnung montiert werden können, insbesondere im Bündelgestell eines Druckgasflaschenbündels oder in oder an dem Ventil einer Druckgasflasche. Beispielsweise besitzen die Windgeneratoren eine maximale Leistung von 100 W, bevorzugt von 10 W oder weniger. Ist als Behälter ein größerer Tank, wie beispielsweise ein Standtank mit einem Füllvolumen zwischen 100 I und 100000 I vorgesehen, entfällt die Notwendigkeit eines kleinen Bauvolumens für den Windgenerator, und es können auch größere Windgeneratoren mit einer Leistung von beispielsweise zwischen 100 Watt und 1000 Watt zum Einsatz kommen, mit denen insbesondere auch weitere elektrisch betriebene Einrichtungen in der Umgebung der Anordnung, wie beispielsweise eine Beleuchtung oder eine Überwachungskamera, autark mit Energie versorgt werden können.

Der Windgenerator ist mit einer Energiespeichereinheit zum Speichern von im Windgenerator erzeugter elektrischer Energie wirkverbunden, bei dem es sich insbesondere um einen Akkumulator handelt. Zur Versorgung der elektronischen Kontrolleinheit und ggf. weiterer elektrisch betriebener Einrichtungen kann Strom direkt vom Windgenerator, oder, falls dort keine Stromerzeugung erfolgt, von der Energiespeichereinheit entnommen werden, was durch eine geeignete Steuerelektronik sichergestellt wird.

Es handelt sich beim Behälter der erfindungsgemäßen Anordnung um ein Druckgasflaschenbündel der eingangs beschriebene Arten.

Im Falle eines nicht zur Erfindung gehörende Tanks, insbesondere eines Standtanks, der im montierten Zustand Höhen von 15 m bis 20 m erreichen kann, ist der Windgenerator als integrierter Bestandteil der Tankkonstruktion vorzugsweise im Bereich des (im montierten Zustand) oberen Endes des Tanks angeordnet. Da dabei die Montage des Windgenerators nicht in sicherheitsrelevante Teile des Tanks eingreifen darf, wird der Windgenerator, bevorzugt lösbar, an oder im Bereich einer zum Aufstellen des Behälters vorhandenen Halteöse montiert oder auf einer unmittelbar neben oder auf dem Behälter angeordneten Einrichtung, etwa einer Haltestange, befestigt. Bevorzugt wird der Windgenerator derart an der Anordnung montiert, dass er den Standtank nach dessen Aufstellung in vertikaler Hinsicht überragt.

Handelt es sich beim Behälter um ein Druckgasflaschenbündel, das in üblicher Weise ein beispielsweise aus metallischen Hohlprofilen aufgebautes Bündelgestell aufweist, innerhalb der eine Mehrzahl von Druckgasflaschen samt Verrohrung und Anschlussarmaturen aufgenommen ist, ist der Windgenerator und/oder die Energiespeichereinheit bevorzugt ebenfalls innerhalb des Rahmengestells angeordnet, um Beschädigungen während des Transports zu vermeiden. Um eine möglichst große Windausbeute zu erzielen, kann der Windgenerator jedoch auch verschwenkbar oder ausziehbar am Bündelgestell angeordnet sein; in diesem Fall wird der Windgenerator bei Bedarf nach Aufstellung des Druckgasflaschenbündels in eine Betriebsposition seitlich oder oberhalb des Außenumfangs des Bündelgestells verfahren, vor einem Transport jedoch in eine geschützte Transportposition innerhalb des Bündelgestells zurückgeführt.

Ist als Behälter eine nicht zur Erfindung gehörende Druckgasflasche vorgesehen, wird der Windgenerator bevorzugt in oder an einem auf dem Entnahmeventil der Druckgasflasche montierten

Flaschenkopf oder Schutzkäfig montiert. In einer weiteren bevorzugten Anordnung ist der Windgenerator und die Speichereinheit Bestandteil eines integrierten Ventils, das auf dem Druckgasbehälter montiert ist. Auch in diesen Fällen kann der Windgenerator verschwenkbar oder ausziehbar am Flaschenkopf, am Ventil oder Schutzkäfig angeordnet sein.

Eine vorteilhafte Ausgestaltung der Erfindung sieht vor, dass die Anordnung, zusätzlich zum Windgenerator, mit wenigstens einer zusätzlichen Einrichtung zur Energieversorgung ausgerüstet ist. Dabei handelt es sich beispielsweise um ein Solarmodul oder einer Batterie (Primärbatterie), die ergänzend zum Windgenerator oder im Falle eines Ausfalls desselben zum Einsatz kommen können.

Bevorzugt weist der Windgenerator eine maximale Leistung zwischen 0,1 W und 1000 W, bevorzugt zwischen 0,2 W und 100 W, besonders bevorzugt zwischen 0,2 W und 10 W auf. Insbesondere Windgeneratoren mit einer Leistung von unter 10 W besitzen ein kleines Bauvolumen und lassen sich problemlos insbesondere in das Rahmengestell von Druckgasflaschenbündeln oder in den Flaschenkopf einer Druckgasflasche, etwa in ein VIPR, montieren.

Bevorzugt umfasst der Windgenerator einen Rotor mit einer im Einbauzustand lotrechten Rotationsachse, beispielsweise einen Darrieus-Rotor. Bei einem derartigen Aufbau müssen die Rotorblätter des Rotors nicht an die jeweilige Windrichtung ausgerichtet werden. Es sind erfindungsgemäß jedoch auch Windgeneratoren mit horizontaler und/oder schwenkbarer Rotationsachse oder mehrere Windgeneratoren, ggf. verschiedenen Typs, vorstellbar.

Die erfindungsgemäße Anordnung ist zum Speichern technischer oder medizinischer Gase in flüssiger oder gasiger Form geeignet, insbesondere zum Speichern von Stickstoff, Sauerstoff, Edelgasen, Kohlendioxid, Wasserstoff oder Mischungen aus zwei oder mehr dieser Gase, insbesondere als Schweißgase, Prüfgase oder Inhalationsgase.

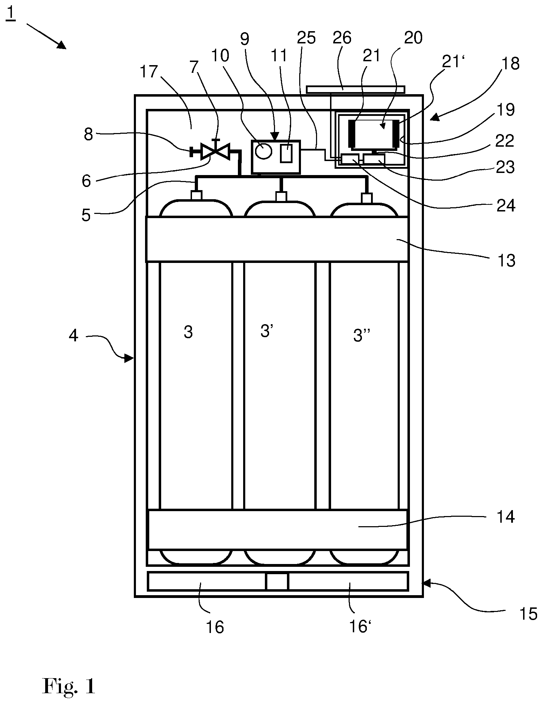

Anhand der Zeichnung sollen nachfolgend ein Ausführungsbeispiel der Erfindung näher erläutert werden. Die einzige Zeichnung (Fig. 1) zeigt schematisch eine erfindungsgemäße Anordnung in einer Seitenansicht.

Die in Fig. 1 gezeigte erfindungsgemäße Anordnung 1 umfasst einen Behälter zum Speichern von Gas in Gestalt eines Druckgasflaschenbündels, bei dem in an sich bekannter Weise eine Anzahl von Druckgasflaschen 3, 3', 3", innerhalb eines Bündelgestells 4 aufgenommen sind. Die Druckgasflaschen 3, 3', 3" sind durch eine Verrohrung 5 strömungstechnisch miteinander verbunden, an der, in ebenfalls an sich bekannter Weise, ein Entnahmeventil 6 mit Handrad 7 und Entnahmeanschluss 8 angeordnet ist. Nicht gezeigt, jedoch im Rahmen der Erfindung möglich, sind ein oder mehrere zusätzliche Entnahmeventile, an denen die Entnahme von Gas zum gleichen Druck wie am Entnahmeventil 6 oder - bei Zwischenschaltung eines Druckminderers am betreffenden Entnahmeventil - zu verminderten Drücken möglich ist. An der Verrohrung 5 ist eine elektronische Kontrolleinheit 9 angeordnet, die im hier gezeigten Ausführungsbeispiel mit einem Druckanzeigegerät 10 und einer Sendereinheit 11 ausgerüstet ist, jedoch auch weitere oder andere elektronische Bauteile umfassen kann. Beispielsweise dient die elektronische Kontrolleinheit 9 dazu, den Druck in der Verrohrung 5, und damit in den Druckbehältern 3, 3', 3", laufend zu erfassen und bei Unterschreiten eines vorgegebenen minimalen Druckwertes mittels der Sendeeinheit 11 ein Warnsignal an eine hier nicht gezeigte Fernwarte am Standort der Anordnung und/oder eines Gaselieferanten abzusenden.

Das Bündelgestell 4 umfasst eine äußere, im Ausführungsbeispiel im Wesentlichen quaderförmige Rahmenkonstruktion aus beispielsweise durch Verschweißen miteinander verbundenen Metallprofilen, beispielsweise Hohlprofile aus Stahl. Die Rahmenkonstruktion ist so bemessen, dass alle Gasflaschen 3, 3', 3", die Verrohrung 4, die elektronische Kontrolleinheit 9 sowie das Entnahmeventil 6 innerhalb der Außenkanten des Bündelgestells 4 angeordnet sind. Des Weiteren umfasst das Bündelgestell 4 seitliche Rahmenprofile 13, 14, die insbesondere dazu dienen, ein seitliches Herausgleiten der Druckgasflaschen 3, 3', 3" zu verhindern. Um den Transport der Anordnung 1 zu erleichtern, weist das Bündelgestell 4 des Weiteren einen palettenartigen Bodenabschnitt 15 mit Transportöffnungen 16, 16' zum Eingreifen durch Transportmittel, etwa durch die Gabel eines Gabelstaplers, auf. Oberhalb des Rahmenprofils 13 weist das Bündelgestell 4 eine Zugangsöffnung 17 auf, durch die hindurch das Entnahmeventil 6 und die elektronische Kontrolleinheit 9 für einen Bediener zugänglich ist.

Zur Energieversorgung der elektronischen Kontrolleinheit 9 kommt erfindungsgemäß ein Windgenerator 18 zum Einsatz. Der Windgenerator 18 ist in einem innerhalb des Bündelgestells 4 aufgenommenen offenen Rahmen 19 montiert und umfasst im hier gezeigten Ausführungsbeispiel einen Rotor 20 mit einer Mehrzahl an senkrecht stehenden Rotorblättern 21, 21', die um eine gleichfalls senkrecht angeordnete Achse 22 drehbar gelagert sind. In einem Generatorabschnitt 23 des Windgenerators 18 wird eine Drehbewegung des Rotors 20 in an sich bekannter und hier nicht weiter interessierender Weise in elektrischen Strom umgewandelt. Weiterhin ist innerhalb des Rahmens 19 eine Speichereinheit 24 zum Speichern von durch den Windgenerator 18 erzeugter elektrischer Energie vorgesehen; beispielsweise handelt es sich bei der Speichereinheit 24 um einen Akkumulator. Windgenerator 18 und Speichereinheit 24 sind über eine Leitung 25 mit der elektronischen Kontrolleinheit 9 elektrisch verbunden. Im Betrieb des Windgenerators 18 wird eine durch eine Luftbewegung in der Umgebung herbeigeführte Drehung des Rotors 20 in elektrischen Strom umgewandelt, der in der Speichereinheit 24 zwischengespeichert und/oder der elektronischen Kontrolleinheit 9 bei Bedarf zugeführt wird. Die im Ausführungsbeispiel senkrechte Positionierung der Rotorblätter 21,21' gewährleisten dabei eine gewisse Unabhängigkeit von der Windrichtung; es sind jedoch im Rahmen der Erfindung auch andere Typen von Windgeneratoren vorstellbar, die anstelle oder ergänzend zum hier gezeigten Windgenerator 18 zum Einsatz kommen können, insbesondere solche mit horizontaler und/oder verschwenkbarer Drehachse. Auch kann eine Mehrzahl von Windgeneratoren 18 an unterschiedlichen Seitenflächen der Anordnung 1 vorgesehen sein, um unterschiedliche Windrichtungen berücksichtigen zu können.

Da der Strombedarf der elektronischen Kontrolleinheit 9 nur gering ist, genügen wenige Windstunden im Jahr, oder eine beim Transport der Anordnung 1 herrschende Luftbewegung, um eine dauerhafte autarke Energieversorgung der elektronischen Kontrolleinheit 9 sicherzustellen.

Im Übrigen kann die Anordnung 1 optional auch weitere Einrichtungen zur Energieversorgung aufweisen, wie beispielsweise ein Solarmodul 26 oder eine (hier nicht gezeigte) Batterie, um eine Stromversorgung auch bei dauerhaftem Fehlen von Luftbewegungen zu gewährleisten.

### Bezugszeichenliste:

- 1: Anordnung
- 2: -
- 3, 3', 3": Druckgasflaschen
- 4: Bündelgestell
- 5: Verrohrung
- 6: Entnahmeventil
- 7: Handrad
- 8: Entnahmeanschluss
- 9: Elektronische Kontrolleinheit
- 10: Druckanzeigegerät
- 11: Sendeeinheit
- 12: -
- 13: Seitliches Rahmenprofil
- 14: Seitliches Rahmenprofil
- 15: Bodenabschnitt
- 16, 16': Transportöffnung
- 17: Zugangsöffnung
- 18: Windgenerator
- 19: Rahmen
- 20: Rotor
- 21, 22': Rotorblätter
- 22: Achse
- 23: Generatorabschnitt
- 24: Speichereinheit
- 25: Leitung
- 26: Solarmodul

## Patentansprüche

1. Anordnung zum Speichern von Gas, mit wenigstens einem Behälter (3, 3', 3") zum Speichern eines Gases in flüssiger oder gasiger Form, mit einer dem wenigstens einen Behälter (3, 3', 3") zugeordneten elektronischen Kontrolleinheit (9) zum Erfassen, Anzeigen und/oder Übermitteln von Daten und mit einer Energieerzeugungseinrichtung zur Bereitstellung der von der Kontrolleinheit (9) benötigten elektrischen Energie,
wobei die Energieerzeugungseinrichtung einen Windgenerator (18) zum Umwandeln von Windenergie in elektrischer Energie und eine Energiespeichereinheit (24) zum zumindest zeitweiligen Speichern von durch den Windgenerator erzeugter elektrischer Energie umfasst,
**dadurch gekennzeichnet,**
**dass** als Behälter ein Druckgasflaschenbündel vorgesehen ist und der Windgenerator (18) innerhalb des Bündelgestells (4) des Druckgasflaschenbündels angeordnet ist.

2. Anordnung nach Anspruch 1, **dadurch gekennzeichnet dass** zusätzlich zu Windgenerator (18) wenigstens eine zusätzliche Einrichtung (26) zur Energieversorgung vorgesehen ist.

3. Anordnung nach einem der vorhergehenden Ansprüche, **dadurch gekennzeichnet, dass** der Windgenerator (18) eine maximale Leistung zwischen 0,1 W und 1000 W, bevorzugt zwischen 0,2 W und 100 W, besonders bevorzugt zwischen 0,2 W und 10 W aufweist.

4. Anordnung nach einem der vorhergehenden Ansprüche, **dadurch gekennzeichnet, dass** der Windgenerator (18) einen Rotor (20) mit einer im Einbauzustand lotrechten Rotationsachse (22) umfasst.

## Claims

1. Arrangement for storing gas, with at least one container (3, 3', 3'') for storing a gas in a liquid or gaseous form, with an electronic control unit (9), which is assigned to the at least one container (3, 3', 3") and is intended for capturing, displaying and/or transmitting data, and with an energy generating device for providing the electrical energy required by the control unit (9),
the energy generating device comprising a wind generator (18) for converting wind energy into electrical energy and an energy storage unit (24) for at least temporarily storing electrical energy generated by the wind generator,
**characterized in that** a compressed-gas cylinder bundle is provided as the container and the wind generator (18) is arranged within the bundle framework (4) of the compressed-gas cylinder bundle.

2. Arrangement according to Claim 1, **characterized in that**, in addition to the wind generator (18), at least one additional device (26) for supplying energy is provided.

3. Arrangement according to one of the preceding claims, **characterized in that** the wind generator (18) has a maximum output of between 0.1 W and 1000 W, preferably between 0.2 W and 100 W, particularly preferably between 0.2 W and 10 W.

4. Arrangement according to one of the preceding claims, **characterized in that** the wind generator (18) comprises a rotor (20) with an axis of rotation (22) that is upright in the installed state.

## Revendications

1. Ensemble de stockage de gaz, comprenant au moins un récipient (3, 3', 3'') destiné à stocker un gaz sous forme liquide ou gazeuse, une unité de commande électronique (9) associée à l'au moins un récipient (3, 3', 3'') et destinée à la détection, l'affichage et/ou la transmission de données et un dispositif de génération d'énergie destiné à fournir de l'énergie électrique nécessaire à l'unité de commande (9),
le dispositif de génération d'énergie comprenant un générateur éolien (18) destiné à convertir l'énergie éolienne en énergie électrique et une unité de stockage d'énergie (24) destinée à stocker au moins temporairement de l'énergie électrique générée par le générateur éolien,
**caractérisé en ce que**
un paquet de bouteilles de gaz comprimé est fourni sous forme de récipient et le générateur éolien (18) est disposé à l'intérieur du cadre de paquet (4) du paquet de bouteilles de gaz comprimé.

2. Ensemble selon la revendication 1, **caractérisé en ce qu'**en plus du générateur éolien (18) au moins un dispositif supplémentaire (26) est prévu pour l'alimentation en énergie.

3. Ensemble selon l'une des revendications précédentes, **caractérisé en ce que** le générateur éolien (18) a une puissance maximale comprise entre 0,1 W et 1000 W, de préférence entre 0,2 W et 100 W, de manière particulièrement préférée entre 0,2 W et 10 W.

4. Ensemble selon l'une des revendications précédentes, **caractérisé en ce que** le générateur éolien (18) comprend un rotor (20) pourvu d'un axe de rotation vertical (22) à l'état installé.
